(19) Europäisches Patentamt
European Patent Office
Office européen des brevets

(11) Publication number: 0 604 655 A1

# (12) EUROPEAN PATENT APPLICATION published in accordance with Art. 158(3) EPC

(21) Application number: **93906850.8**

(22) Date of filing: **30.03.93**

(86) International application number: **PCT/JP93/00395**

(87) International publication number: **WO 93/20148 (14.10.93 93/25)**

(51) Int. Cl.[5]: **C08L 71/10**, F16C 33/12, C08L 71/00, C08K 3/08, C08K 3/04, F16C 33/20

(30) Priority: **30.03.92 JP 102356/92**
**12.06.92 JP 177753/92**

(43) Date of publication of application: **06.07.94 Bulletin 94/27**

(84) Designated Contracting States: **BE CH DE FR GB IT LI NL SE**

(71) Applicant: **IDEMITSU KOSAN COMPANY LIMITED**
**1-1, 3-chome, Marunouchi**
**Chiyoda-ku**
**Tokyo(JP)**

(72) Inventor: **ISHII, Tatsuo**
**Idemitsu Kosan Co., Ltd.,**
**1280, Kamiizumi**
**Sodegaura-shi, Chiba 299-02(JP)**

(74) Representative: **Strehl Schübel-Hopf Groening & Partner**
**Maximilianstrasse 54**
**D-80538 München (DE)**

## (54) BEARING AND RESIN COMPOSITION.

(57) A bearing molded from a resin composition comprising 39.9-80 wt.% of a polycyanoaryl ether mainly constituted of repeating units, represented by general formula (I) (wherein Ar represents (a), (b), (c), (d), (e), (f) or (g)) and having a reduced viscosity [$\eta_{sp}$/c] of 0.6 dl/g or above at 60 °C when dissolved in a concentration of 0.2 g/dl in p-chlorophenol, 5-30 wt.% of a fluororesin and 10-55 wt.% of at least one member selected from among carbon fiber, carbon bead and copper alloy powder. The bearing is excellent in wear resistance, does not damage the mating material, does not make abnormal noise, can prevent malfunctions of electronic equipment caused by electrification, and is lightweight. A resin composition comprising 35-85 wt.% of a polycyanoaryl ether mainly constituted of repeating units, represented by general formula (I) (wherein Ar represents (a), (b), (c), (d), (e), (f) or (g)) and having a reduced viscosity [$\eta_{sp}$/c] of 0.6 dl/g or above at 60 °C when dissolved in a concentration of 0.2 g/dl in p-chlorophenol, 5-60 wt.% of phosphor bronze powder and 5-30 wt.% of a fluororesin. The composition provides a molded article which is excellent in wear resistance irrespective of whether the mating material is rigid or flexible, does not damage the mating material, and does not make abnormal noise. It is also capable of mass production according to injection molding technique.

EP 0 604 655 A1

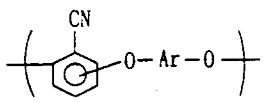 (I)

(a) 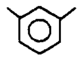

(b) 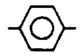

(c) 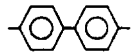

(d) 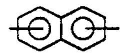

(e) 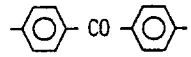

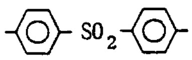
(f)

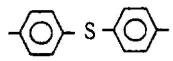
(g)

## TECHNICAL FIELD

The present invention relates to a plastic bearing which is particularly suitable for the paper feed rollers of business machines, for example copying machines, facsimile machines or printing machines, such as dot printers, laser printers, plotters or microleader printers.

The present invention further relates to a resin composition which is widely usable as the material of various moldings, for example the sliding parts of electrical and electronic instruments or machines, including the above-described bearing.

## BACKGROUND ART

Ball bearings or bearings made of porous bearing metal have been used to support the paper feed rollers of conventional business machines. The ball bearings have the advantages of high abrasion resistance, low noise and causing no damage to partner parts, but also have a shortcoming of being weighty and expensive due to their complicated structure. The bearings made of porous bearing metal are simple in structure and relatively inexpensive, but have the shortcoming that the oil contained therein oozes out and deteriorates the environment or adheres to paper. There have been attempts to develop inexpensive plastic bearings which are suitable for mass production. However, even polyacetal bearings with excellent self-lubricating properties have poor abrasion resistance.

Polycyanoarylether resins are known as engineering resins which are excellent in thermal resistance, mechanical properties, electrical properties, flame retardancy and chemical resistance (Japanese Patent Application Kokai Koho (laid-open) No. 62-223226). In spite of these excellent properties and their high critical PV values, polycyanoarylether resins themselves have insufficient abrasion resistance for exhibiting sufficient sliding properties, and, therefore, have been improved with additives, such as fluorocarbon resins or graphite. For example, fluorocarbon resins are known to be effective mainly in decreasing friction coefficient, and graphite and molybdenum disulfide are known to be effective in improving abrasion resistance (Japanese Patent Application Kokai Koho (laid-open) No. 1-224397).

It is also known that the abrasion resistance of polycyanoarylether resins can be improved by adding baked phenolic resins, further with fluorocarbon resins (Japanese Patent Application Kokai Koho (laid-open) No. 01-227597).

The conventional polycyanoarylether resin compositions nevertheless have insufficient abrasion resistance, which limits these compositions' use as the sliding parts of electrical and electronic instruments, machines or the like.

## DISCLOSURE OF INVENTION

An object of the present invention is to provide a sliding bearing which is excellent in abrasion resistance and low noise, causes no damage to partner parts, is light in weight and relatively inexpensive and is suitable, for example, to support the paper feed rollers of business machines.

Another object of the present invention is to provide a polycyanoarylether resin composition which in addition to the excellent fundamental properties of polycyanoarylethers, has various advantages, for example, the advantages of high abrasion resistance, low noise and causing little damage to partner parts, whether the partner parts are hard or soft.

I studied for achieving the objects and found that the above-described problems could be solved by a bearing which is made of a resin composition comprising a specific resin and specific inorganic fillers. On the basis of the finding, I have completed the present invention.

That is, the present invention provides a bearing which is produced by molding a resin composition (hereinafter, it will sometimes be referred to as "resin composition for bearings") comprising 39.9 to 80 % by weight of a polycyanoarylether, 5 to 30 % by weight of a fluorocarbon resin and 10 to 55 % by weight of at least one selected from the group consisting of a carbon fiber, carbon beads and a copper alloy powder, the polycyanoarylether comprising as a main structural component a repeating unit represented by the following general formula

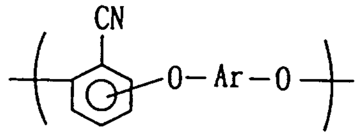 (I)

wherein Ar is

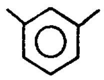 , 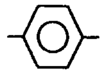 , 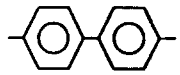 , 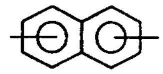 , 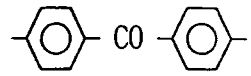 ,

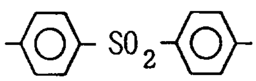 or 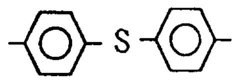 ,

and having a reduced viscosity ($\eta_{sp}/c$) of at least 0.6 dl/g, measured at 60 °C as a solution of a concentration of 0.2 g/dl dissolved in p-chlorophenol.

I further found that a resin composition prepared by adding to the above-described polycyanoarylether a specific combination of additives, namely a phosphor bronze powder and a fluorocarbon resin, had a higher abrasion resistance than that of conventional resin compositions. On the basis of the finding, I have completed the present invention.

That is, the present invention further provides a resin composition comprising 35 to 85 % by weight of a polycyanoarylether, 5 to 60 % by weight of a phosphor bronze powder and 5 to 30 % by weight of a fluorocarbon resin, the polycyanoarylether comprising as a main structural component a repeating unit represented by the following general formula

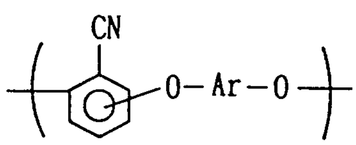 (I)

wherein Ar is

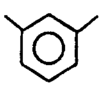 , 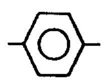 , 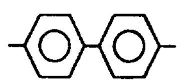 , 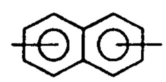 , 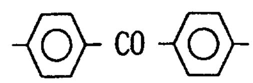 ,

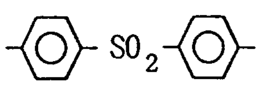 or 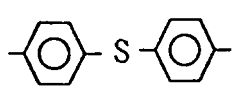 ,

and having a reduced viscosity ($\eta_{sp}/c$) of at least 0.6 dl/g, measured at 60 °C as a solution of a concentration of 0.2 g/dl dissolved in p-chlorophenol. Hereinafter, the resin composition will sometimes be referred to as "molding resin composition".

BEST MODE FOR CARRYING OUT THE INVENTION

The polycyanoarylether to be used in the present invention comprises as a main structural component the repeating unit represented by the formula (I), and preferred examples are those wherein Ar is

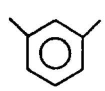 .

Although the percentage of the repeating unit depends on the kind of the repeating unit and cannot be limited uniformly, it is generally preferable that the polycyanoarylether contains at least 90 % by weight of the repeating unit represented by the formula (I), and a particularly preferred is a homopolymer consisting of the repeating unit.

The polycyanoarylether is prepared, for example, by allowing approximately equi-molar proportions of a dihalogenobenzonitrile represented by the following general formula

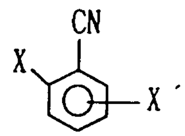

(III)

wherein each of X and X' is a halogen atom,
and a compound represented by HO-Ar-OH to react in the presence of an alkali metal carbonate, in an aprotic polar solvent, in an atmosphere of an inert gas.

Some examples of the alkali metal carbonate which may be used include carbonates, such as sodium carbonate, potassium carbonate, lithium carbonate, cesium carbonate and rubidium carbonate, and hydrogencarbonates corresponding thereto. The amount of the alkali metal carbonate may be selected depending on circumstances, and is generally 1.0 to 1.3 times, preferably slightly more than the equivalents of the compound represented by HO-Ar-OH.

Some examples of the aprotic polar solvent which may be used include N-methylpyrrolidone, 1,3-dimethylimidazolidinone, dimethyl sulfoxide, dimethylformamide and dimethylacetamide. The solvent is used in an amount sufficient for dissolving the compound of the general formula (IV) and the compound represented by HO-Ar-OH.

Agents for extending the polymer chain or end terminators, such as fluorobenzonitrile, may be optionally added prior to or in the course of the polymerization.

Although other reaction conditions depend on various circumstances and cannot be limited uniformly, the reaction temperature is generally not lower than 200 °C, preferably 200 to 210 °C, and the reaction time is generally 2 to 6 hours.

Thus various kinds of polycyanoarylethers are synthesized, and these may be used individually or in a combination of two or more, for example, as a mixture. In the present invention, however, it is necessary to use one having a reduced viscosity ($\eta_{sp}/c$) of at least 0.6 dl/g, preferably 0.6 to 1.5 dl/g, measured at 60 °C as a solution of a concentration of 0.2 g/dl dissolved in p-chlorophenol.

If the reduced viscosity ($\eta_{sp}/c$) measured under the above-described conditions is less than 0.6 dl/g, the properties, such as strength or thermal resistance, of the bearing, will be insufficient for achieving the object of the present invention.

If the percentage of the polycyanoarylether in the resin composition for bearings to be used in the present invention is less than 39.9 % by weight, the resin composition will be difficult to mold into a bearing, or the molded sliding bearing will be too fragile for practical use. If it is more than 80 % by weight, the friction coefficient of the bearing will be too high to exhibit sufficient abrasion resistance.

In the resin composition for bearings to be used in the present invention, the polycyanoarylether may be partially replaced by a polyphenylenesulfide (PPS), a polyetheretherketone (PEEK) or a polyetherimide (PEI). The percentage of the replacement is preferably less than 90 % by weight. If 90 % by weight or more is replaced, the excellent properties inherent to the polycyanoarylether may be canceled. The preferred percentage of the replacement is less than 70 % by weight, more preferably less than 50 % by weight. The molecular weights of PPS, PEEK and PEI are not particularly limited and may be selected depending on the kinds thereof or on the objective use. However, those of too high molecular weights may necessitate a high injection pressure at the time of molding, and the density of the resulting moldings may be so poor as to contain void, causing a decrease in mechanical strength, and those of too small molecular weights will decrease the mechanical strength of moldings. The molecular weights of these resins have to be selected considering the above-descried problems. For example, PPS preferably has an intrinsic viscosity of not less than 0.1 dl/g, more preferably 0.15 to 0.5 dl/g at 206 °C in $\alpha$ -chloronaphthalene. PEEK preferably has an intrinsic viscosity of not less than 0.3 dl/g, more preferably 0.3 to 1.2 dl/g at 60 °C in p-chlorophenol.

The fluorocarbon resin to be used in the resin composition for bearings of the present invention may be selected from various known ones, Some examples include a homopolymer or copolymer of

tetrafluoroethylene, a copolymer of tetrafluoroethylene and hexafluoropropylene, a polymer of chlorotrifluoroethylene, a copolymer of tetrafluoroethylene and perfluoropropylene and a polymer of vinylidenefluoride. A particularly preferred is a polytetrafluoroethylene (PTFE). These fluorocarbon resins may be used individually or in a combination of two or more.

If the amount of the fluorocarbon resin in the resin composition for bearings which is to be used in the present invention is less than 5 % by weight, the resulting bearing will have a high friction coefficient, and if it is more than 30 % by weight, the fluorocarbon resin will cohere and cannot be dispersed uniformly in the resin composition, thereby deteriorating the appearance and mechanical strength of the resulting bearing.

The resin composition for bearings which is to be used in the present invention further contains from 10 to 55 % by weight of at least one selected from a carbon fiber, carbon beads and a copper alloy powder.

The carbon fiber may be any one selected from various known ones including acrylonitrile carbon fibers, pitch carbon fibers and cellulose carbon fibers. The carbon fiber preferably has a fiber diameter of 5 to 20 $\mu$ m and a fiber length of approximately 0.1 to 10 mm, and generally, chopped fiber of approximately 6 mm in length or roving, which has been generally used as a resin filler, may be suitably used.

The carbon fiber may be used without pretreatment, or the surface of which may has been treated with various treating agents. For example, it is possible to use a carbon fiber the surface of which has been subjected to an acid treatment, a base treatment, a partial oxidation or a metallization. The examples of commercial carbon fibers which may be used include TORAYCA T-300 (Trade name, produced by Toray Industries, Inc.), BESFIGHT HTA, BESFIGHT 1000 (Trade names, produced by Toho Rayon Co., Ltd.), KURECA M and KURECA C (Trade names, produced by Kureha Chemical Industry Co., Ltd.).

The carbon beads are produced by heating a resol resin or a novolak resin and a hardener, such as hexamethylenetetramine, to cure, and then carbonizing by baking in an inert atmosphere, and generally consists of glassy carbonaceous particles. Particularly preferred examples are carbon beads which are produced by heat-treating, at a temperature of not lower than 500 °C, in a non-oxidizing atmosphere, a granular or powdery phenolformaldehyde resin having a solubility in methanol of not more than 20 % by weight, and comprise the primary particles and secondary agglomerates of spherical or granular carbonaceous fine particles having an apparent density of 0.6 to 0.8 g/cc, a specific gravity of 1.3 to 1.6, a specific surface area of not less than 10 $m^2/g$ and particle diameters of 0.1 to 150 $\mu$ m, and at least 50 % by weight of which pass through a sieve of 100 Tyler mesh. Among these, particularly preferred examples are those having an average particle diameter of 15 to 20 $\mu$ m. Such carbon beads are disclosed in Japanese Patent Application Kokai Koho (laid-open) No. 63-128058 and Japanese Patent Application Kokai Koho (laid-open) No. 63-130666.

Further, there are known commercial carbon beads, such as carbon beads of BELL PEARL (Trade name) series produced by Kanebo, Ltd., which are particularly suitable because of easy availability. The preferred examples of the BELL PEARL series include BELL PEARL H-500, C-600, C-800, C-2000 and C-2000S, and particularly preferred are C-600, C-2000 and C-2000S. Among these, one kind of carbon beads may be used individually, or two or more kinds of carbon beads may be used in a combination.

The copper alloy powder to be used in the present invention contains, in addition to copper, at least another element, such as tin, zinc, lead, nickel, iron, phosphorus, aluminum or silicon, in an amount which causes no trouble when blended with the above-described resin component. Preferred examples include a powder of brass, bronze or phosphor bronze, and particularly preferred are a brass containing 12 to 40 % by weight of zinc, a bronze containing 2 to 40 % by weight of tin, and a phosphor bronze containing 1 to 20 % by weight of tin and 1 to 20 % by weight of phosphorus.

The copper alloy powder preferably has a particle diameter of not less than 1 $\mu$ m. A copper alloy powder of less than 1 $\mu$ m in particle diameter may cohere, preventing uniform dispersion.

Generally, the resin itself has a volume resistivity of not less than $10^{12}$ $\Omega \cdot$cm. Bearings formed therefrom suffer from the defect that the rotation of shafts generates static electricity, which causes the adhesion of dust to the shafts or induces the malfunction of neighboring electronic instruments.

The addition of the carbon fiber or carbon beads to be used in the present invention to the resin decreases the volume resistivity of the resin composition, provided that not less than 10 % by weight of the carbon fiber or not less than 50 % by weight of the carbon beads are added. However, the volume resistivity of the resin composition for bearings to be used in the present invention can be decreased to $10^6$ $\Omega \cdot$cm or less by further adding a relatively small amount, namely 0.1 to 10 % by weight of a carbon black, thereby endowing the bearing with an antistatic property. The examples of the carbon black include an acetylene black, a ketchen black, a furnace black, a thermal black and a channel black, and a ketchen black is preferable since even a small amount of ketchen black effectively decreases volume resistivity. A preferred carbon black has a particle diameter of 0.01 to 1 $\mu$ m.

At the time when the resin composition for bearings to be used in the present invention is prepared or used, for example, processed, other polymer components or additives than those described above, such as antioxidants, colorants, fillers, UV absorbers, lubricants, mold release agents, thixotroping agents, flowability-improving agents, surface modifiers or heat stabilizers, according to demand, so far as the object of the present invention can be achieved.

In preparing the resin composition for bearings to be used in the present invention, the order and method of mixing the above-described components are not particularly limited. For example, it is generally suitable to dry blending the thermoplastic resin component, for example, the above-described polycyanoarylether, polyphenylene sulfide, polyetheretherketone and polyetherimide, the fluorocarbon resin component and at least one selected from the above-described carbon fiber, carbon beads and copper alloy powder, in the ratios described above, and then melt kneading the blend. The preferred temperature of the melt kneading is generally 340 to 380 °C, preferably 350 to 370 °C.

After optional molding into various moldings, such as pellets, using a uniaxial or biaxial extruder, the thus prepared resin composition for bearing is molded, for example, by injection molding into a desired bearing shape.

The thus obtained bearing is extremely excellent and advantageous in practical use since it has high abrasion resistance, causes no damage to partner parts, produces no offensive noise, prevents the malfunction of electronic instruments due to electrification and is light in weight, and it may be advantageously used widely for example, as the sliding bearing for the paper feed rollers of business machines, such as copying machines, facsimile machines or printing machines.

The molding resin composition, which comprises 35 to 85 % by weight, preferably 39.9 to 80 % by weight of the polycyanoarylether, 5 to 60 % by weight, preferably 10 to 55 % by weight of a phosphor bronze and 5 to 30 % by weight of a fluorocarbon resin, exhibits high abrasion resistance, causes no damage to partner parts and produces no offensive noise whether partner parts are hard or soft. Further, because of its moldability by injection molding, the molding resin composition is very suitable for mas-production and may be advantageously used in wide fields as the material of various moldings, such as the sliding parts of electrical and electronic instruments and other machines. In particular, it is suitable as the material of bearings for the paper feed rollers of business machines, for example copying machines, facsimile machines or printing machines, such as dot printers, laser printers, plotters or microleader printers.

If the content of the polycyanoarylether in the molding resin composition of the present invention is less than 35 % by weight, molding will become difficult, and moldings, if any, will be too fragile for practical use. If it is more than 85 % by weight, the composition will be insufficient in abrasion resistance.

The phosphor bronze powder to be used in the molding resin composition of the present invention is the same as the above-described one, and may be selected from those exemplified above depending on the purpose of use. The particle diameter of preferable phosphor bronze powder is 1 to 200 μ m. If the particle diameter is less than 1 μ m, the phosphor bronze powder may cohere, preventing uniform dispersion. If it is more than 200 μ m, surface smoothness or surface appearance may be deteriorated.

The fluorocarbon resin to be used in the molding resin composition of the present invention is the same as the above-described one, and preferred examples include a polytetrafluoroethylene (PTFE) and a copolymer of polytetrafluoroethylene-perfluoropropylene copolymer (PFA). These fluorocarbon resins may be used individually or in a combination of two or more. If the percentage of the fluorocarbon resin is less than 5 % by weight, the friction coefficient of moldings will be increased, and if it is more than 30 % by weight, the fluorocarbon resin will cohere in the composition and cannot be dispersed uniformly, thereby deteriorating the appearance and mechanical strength of moldings.

At the time of preparing or using, for example, processing the molding resin composition of the present invention, other polymer components or additives, such as those which may be added to the above-described resin composition for bearings, may be added, so far as the object of the present invention can be achieved.

In preparing the molding resin composition of the present invention, the order and method of blending the above-described components and the method of molding are the same as those described with respect to the above-described resin composition for bearings.

Hereinafter, the present invention will be described in detail referring to examples, which however do not limit the scope of the present invention.

EXAMPLES 1 TO 9 AND COMPARATIVE EXAMPLES 1 AND 2

The thermoplastic resin component, the fluorocarbon resin component and at least one selected from the carbon fiber, carbon beads and copper alloy powder listed in Table 1 were dry blended in the ratios listed in Table 1. Each blend was then melt kneaded with a biaxial extruder to form strands, which were then cut, to obtain pellets of different composition. The pellets were molded by using an injection molding machine at a melt temperature of 350 °C and a mold temperature of 200 °C, to form cylindrical sliding bearings of 8 mm in internal diameter, 12 mm in external diameter and 9 mm in length and a plate of 3 mm (thickness)× 80 mm× 80 mm.

Each sliding bearing was assembled as a bearing into the feeding part of a copying machine No. 5039 produced by Fuji Xerox Co., Ltd., and a million copies of an A-4 sheet were made continuously at 40 sheets/min. The shaft used in the feeding part was Ni-plated SUM 22 [sulfur composite free-cutting steel (JIS G 4804)] of 7.95 mm in diameter.

Abrasion loss was evaluated by measuring the change in the diameter of the bearing before and after copying. During the copying, the production of offensive noise was checked for. Further, after the copying, it was visually examined whether the shaft was damaged. The results are listed in Table 1 as actual-machine evaluations. In Table 1, the amounts of the components blended are expressed in % by weight.

Each plate of 3 mm (thickness)× 80 mm× 80 mm was set up on a friction-abrasion tester of Suzuki-shiki thrust type (Type: EFM-III-F, produced by Orientech Co., Ltd.), and the measurement of friction coefficient was carried out under the conditions of a pressure of 2 $kg/cm^2$ and a rate of 5 m/min, with a partner part made of S45C.

The measurement of volume resistivity was carried out by using a plate of 3 mm (thickness)× 80 mm× 80 mm in accordance with ASTM D257. The results are listed in Table 1.

COMPARATIVE EXAMPLE 3

A sliding bearing and plates of the same shapes as the shapes of those produced in Example 1 were formed from pellets of a polyacetal produced by Polyplastic Co., Ltd. (Trade name: JURAKON M 90-44) by using an injection molding machine at a melt temperature of 210 °C and a mold temperature of 80 °C .

Actual-machine evaluations and the measurements of friction coefficient and volume resistivity were carried out in the same manner as in Example 1. The results are listed in Table 1.

COMPARATIVE EXAMPLE 4

A sintered bearing, which was made of a porous copper bearing metal of 8 mm in internal diameter, 12 mm in external diameter and 9 mm in length and was incorporated in a copying machine produced by Fuji Xerox Co., Ltd., was subjected to the same actual-machine evaluation as that carried out in Example 1. The results are listed in Table 1.

TABLE 1-1

| | Examples | | | | |
|---|---|---|---|---|---|
| | 1 | 2 | 3 | 4 | 5 |
| Polycyanoarylether | 48 | 58 | 77 | 58 | 50 |
| Polyetheretherketone | - | - | - | - | - |
| Polyphenylene sulfide | - | - | - | - | - |
| Polyetherimide | - | - | - | - | - |
| Polytetrafluoroethylene | 20 | 20 | 10 | 20 | 20 |
| Polytetrafluoroethylene-perfluoropropylene copolymer | - | - | - | - | - |
| Carbon fiber | - | - | - | - | 10 |
| Carbon beads | 30 | - | - | - | 20 |
| Bronze powder | - | 20 | 10 | - | - |
| Phosphor Bronze powder | - | - | - | 20 | - |
| Carbon black | 2 | 2 | 3 | 2 | - |
| Actual-machine evaluations | | | | | |
| Abrasion of bearing (μ m)<br>Offensive noise<br>Damage to partner part | 13<br>No<br>No | 7<br>No<br>No | 14<br>No<br>No | 8<br>No<br>No | 11<br>No<br>No |
| Coefficient of dynamic friction | 0.22 | 0.24 | 0.26 | 0.22 | 0.19 |
| Volume resistivity | $2.5\times 10^3$ | $1.8\times 10^3$ | $1.7\times 10^4$ | $2.2\times 10^4$ | $8.7\times 10^4$ |

TABLE 1-2

| | Examples | | | |
|---|---|---|---|---|
| | 6 | 7 | 8 | 9 |
| Polycyanoarylether | 33 | 33 | 33 | 48 |
| Polyetheretherketone | 15 | - | - | - |
| Polyphenylene sulfide | - | 15 | - | - |
| Polyetherimide | - | - | 15 | - |
| Polytetrafluoroethylene | 20 | 20 | 20 | - |
| Polytetrafluoroethylene-perfluoropropylene copolymer | - | - | - | 20 |
| Carbon fiber | - | - | - | - |
| Carbon beads | 30 | 30 | - | 10 |
| Bronze powder | - | - | - | - |
| Phosphor Bronze powder | - | - | 30 | 20 |
| Carbon black | 2 | 2 | 2 | 2 |
| Actual-machine evaluation | | | | |
| Abrasion of bearing (μ m)<br>Offensive noise<br>Damage to partner part | 16<br>No<br>No | 10<br>No<br>No | 10<br>No<br>No | 5<br>No<br>No |
| Coefficient of dynamic friction | 0.21 | 0.24 | 0.20 | 0.23 |
| Volume resistivity | $3.6\times 10^{3}$ | $8.4\times 10^{3}$ | $9.5\times 10^{4}$ | $1.7\times 10^{4}$ |

TABLE 1-3

| | Comparative Examples | | | |
|---|---|---|---|---|
| | 1 | 2 | 3* | 4* |
| Polycyanoarylether | 87 | 30 | | |
| Polytetrafluoroethylene | 5 | 20 | | |
| Carbon fiber | - | 30 | | |
| Carbon beads | - | 20 | | |
| Phosphor Bronze powder | 5 | - | | |
| Carbon black | 3 | - | | |
| Actual-machine evaluation | | | | |
| Abrasion of bearing (μ m)<br>Offensive noise<br>Damage to partner part | 80<br>No<br>No | 90<br>Produced<br>Produced | 160<br>No<br>No | 10<br>No<br>No |
| Coefficient of dynamic friction | 0.31 | 0.35 | 0.27 | - |
| Volume resistivity | $4.3\times 10^3$ | $4.2 \times 10^3$ | $10^{12}$ or more | - |

Comparative Example 3*: a bearing made of polyacetal
Comparative Example 4*: a sintered bearing made of a porous copper bearing metal. Paper was stained with oil.

EXAMPLES 10 TO 16 AND COMPARATIVE EXAMPLES 5 TO 7

The thermoplastic resin component, phosphor bronze powder and fluorocarbon resin listed in Table 1 were dry-blended in the ratios listed in Table 1, to pellets of various compositions. Each kind of pellets were molded by using an injection molding machine under the conditions of a melt temperature of 350 °C and a mold temperature of 200 °C, to obtain a plate of 3 mm (thickness)× 80 mm× 80 mm.

The plate was cut to obtain test pieces for measuring sliding properties.

By using a thrust-type abrasion tester (EFM-III-F, produced by Orientech Co., Ltd.), the test pieces and S45C (hard) and ADC12 (soft) as partner parts, the measurements of friction coefficients and the abrasion loss of the partner parts and the investigation of the production of offensive noise were carried out. The results are listed in Table 2.

TABLE 2-1

| | Examples | | | | |
|---|---|---|---|---|---|
| | 10 | 11 | 12 | 13 | 14 |
| Polycyanoarylether | 40 | 50 | 50 | 50 | 30 |
| Polyetheretherketone | - | - | - | - | 20 |
| Phosphor bronze powder | 50 | 30 | 40 | 30 | 30 |
| Polytetrafluoroethylene | 10 | 20 | 10 | - | 20 |
| Polytetrafluoroethylene-perfluoroethylene copolymer | 0 | 0 | 0 | 20 | 0 |
| Partner part: S45C | | | | | |
| Coefficient of dynamic friction [$cm^3 \cdot sec/kg \cdot m \cdot hr$]<br>Abrasion loss of partner part [mg/hr]<br>Offensive noise | $2 \times 10^{-5}$<br><0.1<br>No | $1 \times 10^{-5}$<br><0.1<br>No | $2 \times 10^{-5}$<br><0.1<br>No | $1 \times 10^{-5}$<br><0.1<br>No | $4 \times 10^{-5}$<br><0.1<br>No |
| Partner part: ADC12 | | | | | |
| Coefficient of dynamic friction [$cm^3 \cdot sec/kg \cdot m \cdot hr$]<br>Abrasion loss of partner part [mg/hr]<br>Offensive noise | $2 \times 10^{-5}$<br><0.1<br>No | $1 \times 10^{-5}$<br><0.1<br>No | $3 \times 10^{-5}$<br><0.1<br>No | $2 \times 10^{-5}$<br><0.1<br>No | $8 \times 10^{-5}$<br><0.1<br>No |

TABLE 2-2

| | Examples | | Comparative examples | | |
|---|---|---|---|---|---|
| | 15 | 16 | 5 | 6 | 7 |
| Polycyanoarylether | 30 | 70 | 50 | 50 | 50 |
| Polyphenylene sulfide | 20 | - | - | - | - |
| Phosphor bronze powder | 30 | 20 | - | - | - |
| Polytetrafluoroethylene | 20 | 10 | - | 20 | 20 |
| Graphite | - | - | 50 | - | 30 |
| $MoS_2$ | - | - | - | 30 | - |
| Partner part: S45C | | | | | |
| Coefficient of dynamic friction [$cm^3 \cdot sec/kg \cdot m \cdot hr$]<br>Abrasion loss of partner part [mg/hr]<br>Offensive noise | $5 \times 10^{-5}$<br><0.1<br>No | $6 \times 10^{-5}$<br><0.1<br>No | $260 \times 10^{-5}$<br>0.7<br>Produced | $110 \times 10^{-5}$<br>0.9<br>Produced | $9 \times 10^{-5}$<br>0.4<br>No |
| Partner part: ADC12 | | | | | |
| Coefficient of dynamic friction [$cm^3 \cdot sec/kg \cdot m \cdot hr$]<br>Abrasion loss of partner part [mg/hr]<br>Offensive noise | $11 \times 10^{-5}$<br><0.1<br>No | $3 \times 10^{-5}$<br>0.1<br>No | $180 \times 10^{-5}$<br>10.2<br>Produced | $14 \times 10^{-5}$<br>5.8<br>No | $16 \times 10^{-5}$<br>4<br>No |

The details of the materials used in Examples and Comparative Examples are as follows.

Polycyanoarylether: Produced by Idemitsu Kosan Co., Ltd. ($\eta_{sp}/c = 1.0$ dl/g)

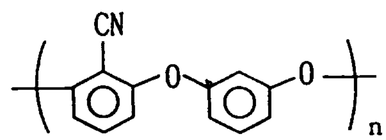

Polyetheretherketone (PEEK): produced by I.C.I., Trade name: VICTREX PEEK 450G

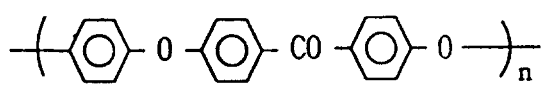

Polyphenylenesulfide (PPS): produced by Kureha Chemical Industry Co., Ltd., Trade name: KPS#214

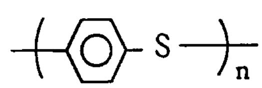

Polyetherimide: produced by General Electric Company, Trade name: ULTEM 1000)

Polytetrafluoroethylene (PTFE): produced by Daikin Industries, Ltd., Trade name: RUBURON L-2, average particle diameter: 0.5 μm

Polytetrafluoroethylene-perfluoropropylene copolymer (PFA): produced by Mitsui•Dupont Phlorochemical Co., Ltd., Trade name: PFA-340J, average particle diameter: 8 μm

Carbon fiber (CF): produced by Toho Rayon Co., Ltd., Trade name: HTA-C6, $\phi$ 7 μm× 6 mm (length)

Carbon beads: produced by Kanebo, Ltd., Trade name: C2000S, average particle diameter: 5 μm

Bronze powder: produced by Fukuda Kinzoku Hakufun Kogyo Kabushiki Kaisha, Trade name: Bro-ATW200, average particle diameter: 40 μm

Phosphor bronze powder: produced by Fukuda Kinzoku Hakufun Kogyo Kabushiki Kaisha, Trade name: CU76-AT200, average particle diameter: 40 μm

Carbon black: produced by Lion Corp., Trade name: EC600JD, average particle diameter: 0.03 μm

Graphite: produced by Nippon Kokuen Kogyo Kabushiki Kaisha, Trade name: ACP-1000, average particle diameter: 1 μm

Molybdenum disulfide ($MoS_2$): Nippon Kokuen Kogyo Kabushiki Kaisha, Trade name: MOLYPOWDER A, average particle diameter: 0.5 μm

The bearing produced according to the present invention is a practically excellent and advantageous bearing which has high abrasion resistance, causes no damage to partner parts, produces no offensive noise and can prevent electrical and electric equipments from malfunction due to electrification and is light in weight.

The resin composition prepared according to the present invention has such a practically excellent properties that it exhibits high abrasion resistance, causes no damage to partner parts and produces no offensive noise whether partner parts are hard or soft, and it can be injection molded in mass production scale.

## Claims

**1.** A bearing which is produced by molding a resin composition comprising 39.9 to 80 % by weight of a polycyanoarylether, 5 to 30 % by weight of a fluorocarbon resin and 10 to 55 % by weight of at least one selected from the group consisting of a carbon fiber, carbon beads and a copper alloy powder, the polycyanoarylether comprising as a main structural component a repeating unit represented by the following general formula

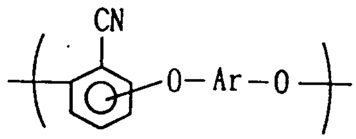 (I)

wherein Ar is

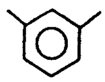 , 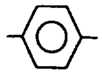 , 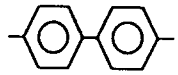 , 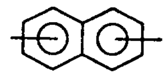 , 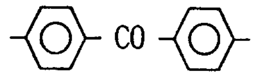 ,

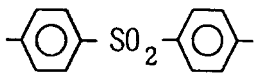 or 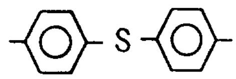 ,

and having a reduced viscosity ($\eta_{sp}/c$) of at least 0.6 dl/g, measured at 60 °C as a solution of a concentration of 0.2 g/dl dissolved in p-chlorophenol.

**2.** A bearing which is produced by molding a resin composition comprising 39.9 to 80 % by weight of a polycyanoarylether, 5 to 30 % by weight of a fluorocarbon resin, 10 to 55 % by weight of at least one selected from the group consisting of a carbon fiber, carbon beads and a copper-alloy powder, and 0.1 to 10 % by weight of carbon black, the polycyanoarylether comprising as a main structural component a repeating unit represented by the following general formula

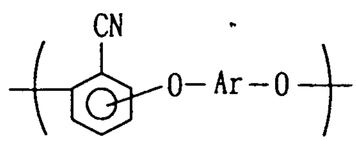 (I)

wherein Ar is

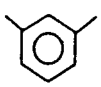 , 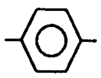 , 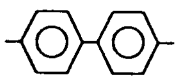 , 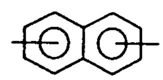 , 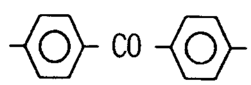 ,

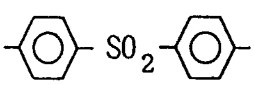 or 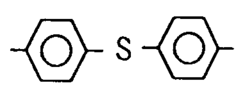 ,

and having a reduced viscosity ($\eta_{sp}/c$) of at least 0.6 dl/g, measured at 60 °C as a solution of a concentration of 0.2 g/dl dissolved in p-chlorophenol.

**3.** The bearing of claim 1 or 2, wherein a part of the polycyanoarylether is replaced by a polyphenylenesulfide, a polyetheretherketone or a polyetherimide.

**4.** The bearing of claim 3, wherein 90 to 50 % by weight of the polycyanoarylether is replaced by the polyphenylenesulfide, the polyetheretherketone or the polyetherimide.

**5.** The bearing of claim 3, wherein less than 50 % by weight of the polycyanoarylether is replaced by the polyphenylenesulfide, the polyetheretherketone or the polyetherimide.

**6.** The bearing of claim 1 or 2, wherein the fluorocarbon resin is a polytetrafluoroethylene.

**7.** The bearing of claim 1 or 2, wherein the copper alloy powder is a phosphor bronze powder containing 1 to 20 % by weight of tin and 1 to 20 % by weight of phosphorus.

**8.** The bearing of claim 1 or 2, wherein the carbon fiber is a chopped fiber of 5 to 20 $\mu$ m in fiber diameter and 0.1 to 10 mm in fiber length.

**9.** A bearing for a paper feed roller, which is produced by molding the resin composition described in any one of claims 1 to 8.

**10.** A resin composition comprising 35 to 85 % by weight of a polycyanoarylether, 5 to 60 % by weight of a phosphor bronze powder and 5 to 30 % by weight of a fluorocarbon resin, the polycyanoarylether comprising as a main structural component a repeating unit represented by the following general formula

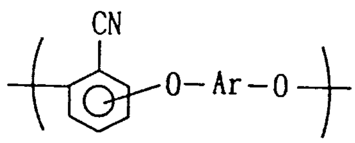 (I)

wherein Ar is

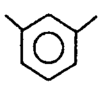 , 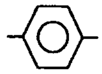 , 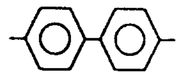 , 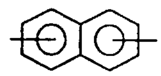 , 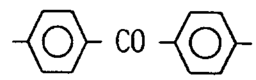 ,

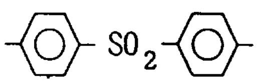 or 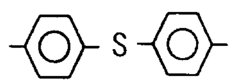 ,

and having a reduced viscosity ($\eta_{sp}/c$) of at least 0.6 dl/g, measured at 60 °C as a solution of a concentration of 0.2 g/dl dissolved in p-chlorophenol.

**11.** The resin composition of claim 10, wherein a part of the polycyanoarylether is replaced by a polyphenylenesulfide, a polyetheretherketone or a polyetherimide.

**12.** The resin composition of claim 11, wherein 90 to 50 % by weight of the polycyanoarylether is replaced by the polyphenylenesulfide, the polyetheretherketone or the polyetherimide.

**13.** The resin composition of claim 11, wherein less than 50 % by weight of the polycyanoarylether is replaced by the polyphenylenesulfide, the polyetheretherketone or the polyetherimide.

**14.** The resin composition of claim 10 or 11, wherein the fluorocarbon resin is a polytetrafluoroethylene or a polytetrafluoroethylene-perfluoropropylene copolymer.

**15.** The resin composition of claim 10 or 11, wherein the phosphor bronze powder has a particle diameter of 1 to 200 $\mu$ m.

**INTERNATIONAL SEARCH REPORT**

International application No.
PCT/JP93/00395

**A. CLASSIFICATION OF SUBJECT MATTER**

Int. $Cl^5$ C08L71/10, F16C33/12

According to International Patent Classification (IPC) or to both national classification and IPC

**B. FIELDS SEARCHED**

Minimum documentation searched (classification system followed by classification symbols)

Int. $Cl^5$ C08L71/10, F16C33/12

Documentation searched other than minimum documentation to the extent that such documents are included in the fields searched

Jitsuyo Shinan Koho 1926 - 1993
Kokai Jitsuyo Shinan Koho 1971 - 1993

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| | JP, A, 1-236269 (Idemitsu Kosan Co., Ltd.), September 21, 1989 (21. 09. 89), (Family: none) | |
| X | Line 4, upper right column to line 10, lower left column, page 2 | 1-15 |
| X | Lines 14 to 15, lower left column, page 3 | 1-15 |
| X | Lines 7 to 9, upper left column, page 6 | 1-9 |
| | JP, A, 61-190553 (Idemitsu Kosan Co., Ltd.), August 25, 1986 (25. 08. 86), (Family: none) | |
| X | Line 3, upper right column to line 2, lower left column, page 2 | 1-15 |
| X | Lines 5 to 7, upper right column, page 3 | 1-9 |
| | JP, A, 4-015253 (NTN-Rulon Industries Co., Ltd.), January 20, 1992 (20. 01. 92), (Family: none) | |
| X | Line 18, upper left column to line 7, lower left column, page 2 | 1-15 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| May 12, 1993 (12. 05. 93) | June 1, 1993 (01. 06. 93) |
| Name and mailing address of the ISA/ Japanese Patent Office | Authorized officer |
| Facsimile No. | Telephone No. |

**INTERNATIONAL SEARCH REPORT**

International application No.
PCT/JP93/00395

C (Continuation). DOCUMENTS CONSIDERED TO BE RELEVANT

| Category* | Citation of document, with indication, where appropriate, of the relevant passages | Relevant to claim No. |
|---|---|---|
| X | Line 3, upper left column to line 1, upper right column, page 3 | 1-15 |
| X | Lines 15 to 19, lower left column, page 4 | 1-9 |
| A | JP, A, 59-182843 (AE PLC), October 17, 1984 (17. 10. 84), Line 5, lower left column to line 4, lower right column, page 2 & EP, A3, 119815 & GB, B, 2136439 & US, A, 4592782 & CA, A, 1227184 | 1-15 |
| A | JP, A, 62-266223 (AE PLC), November 19, 1987 (19. 11. 87), Line 18, upper left column to line 13, upper right column, page 2 & GB, B, 2136439 & EP, A3, 119815 & US, A, 4592782 & CA, A, 1227184 | 1-15 |
| A | JP, A, 58-160352 (AE PLC), September 22, 1983 (22. 09. 83), Line 15, upper left column to line 12, upper right column, page 2 & FR, A, 2515195 & US, A, 4421588 & ZA, A, 8207687 & US, E, RE32595 & GB, B, 2108983 & IT, B, 1158021 & DE, C, 3238987 | 1-15 |
| A | JP, A, 63-286458 (Yo. Bear Luron Kogyo K.K.), November 24, 1988 (24. 11. 88), (Family: none) Line 18, upper left column to line 16, lower right column, page 2 | 1-15 |
| A | JP, A, 58-179262 (Mitsui Toatsu Chemicals, Inc.), October 20, 1983 (20. 10. 83), (Family: none) Line 9, upper left column, page 2 to line 16, upper left column, page 3 | 1-15 |
| A | JP, A, 61-225247 (Union Carbide Corp.), October 7, 1986 (07. 10. 86), Line 8, lower left column, page 5 to line 3, upper left column, page 6 & CA, A, 1266341 & US, A, 4965310 & EP, B, 199999 & DE, G, 3681192 | 1-15 |